# EUROPEAN PATENT APPLICATION

(11) **EP 4 819 017 A1**
(43) Date of publication of application: **07.10.2026**
(21) Application number: 26159318.0
(22) Date of filing: 18.02.2026
(51) Int. Cl.: G06Q 30/02

(54) **ESTIMATION METHOD AND ESTIMATION PROGRAM**

(30) Priority: 31.03.2025 JP 2025058622
(71) Applicant: FUJITSU LIMITED, Kawasaki-shi, Kanagawa 211-8588 (JP)
(72) Inventor: MITOMI, Tatsuya, Kawasaki-shi, Kanagawa, 211-8588 (JP); SEGAWA, Eigo, Kawasaki-shi, Kanagawa, 211-8588 (JP); MAKINOSHIMA, Fumiyasu, Kawasaki-shi, Kanagawa, 211-8588 (JP); MAKIHARA, Fumiya, Kawasaki-shi, Kanagawa, 211-8588 (JP)
(74) Representative: Hoffmann Eitle

(57) **Abstract**

Provided is an estimation method including generating a probability model for estimating a probability that a prospective purchaser changes purchase from a first commodity to a second commodity based on prices of the first commodity and the second commodity, a price change amount of the second commodity, and information indicating whether a purchaser has actually changed the purchase from the first commodity to the second commodity according to price change of the second commodity (S5), and calculating an estimated number of purchases of each of the first commodity and the second commodity based on the probability model (S6).

## Description

### FIELD

A certain aspect of the embodiments described herein relates to an estimation method and an estimation program.

### BACKGROUND

Approaches are known that use discrete choice models that allow a demand model to capture interdependencies between the demands of different for different products that a firm offers (see, for example, Japanese National Publication of International Patent Application No. 2023-547777).

### SUMMARY

The present invention has been made in view of those circumstances, and an object thereof is to provide an estimation method and an estimation program for accurately estimating the number of commodities that changes with a change in the price of the commodity.

According to an aspect of the embodiments, there is provided an estimation method including generating a probability model for estimating a probability that a prospective purchaser changes purchase from a first commodity to a second commodity based on prices of the first commodity and the second commodity, a price change amount of the second commodity, and information indicating whether a purchaser has actually changed the purchase from the first commodity to the second commodity according to price change of the second commodity, and calculating an estimated number of purchases of each of the first commodity and the second commodity based on the probability model.

### BRIEF DESCRIPTION OF DRAWINGS

FIG. 1 is an example of an estimation system.
FIG. 2 is an example of a hardware configuration of an estimation server.
FIG. 3 is an example of a functional configuration of the estimation server according to a first embodiment.
FIG. 4A is an example of purchase history data.
FIG. 4B is an example of current discount amount data.
FIG. 4C is an example of optimum discount amount data.
FIG. 5 is a flowchart illustrating an example of processing executed by the estimation server according to the first embodiment.
FIG. 6 is a flowchart illustrating an example of a first estimation processing.
FIG. 7 is an example of input/output of a status confirmation screen according to the first embodiment.
FIG. 8A is a diagram for explaining an example of prices of commodities and discount amount.
FIG. 8B is a flowchart for explaining the outline of the first embodiment.
FIG. 8C is an example of a first probability model.
FIG. 8D is an example of a second probability model.
FIG. 9 is an example of a functional configuration of the estimation server according to a second embodiment.
FIG. 10A is an example of target value data.
FIG. 10B is an example of usage history data.
FIG. 11A is another example of the current discount amount data.
FIG. 11B is another example of the optimum discount amount data.
FIG. 12 is a flowchart illustrating an example of processing executed by the estimation server according to the second embodiment.
FIG. 13 is a flowchart illustrating an example of a second estimation processing.
FIG. 14 is an example of input/output of a status confirmation screen according to the second embodiment.

### DESCRIPTION OF EMBODIMENTS

By the way, change in a price of a commodity, such as a reduction or increase in the price of the commodity, can affect the sale of a business operator. When a right price is set for the commodity, the demand for the commodity increases and the business operator may secure the maximum sales. In other words, if an inappropriate price is set for the commodity, the demand for the commodity may decrease, and it will be difficult for the business operator to secure the sales. As such, the demand for the commodity fluctuates depending on the price that is set for the commodity. For example, in the case of the commodity sold by the business operator, the number of a purchaser who purchases the commodity, the number of pieces of the commodity to be purchased, and the like vary.

From this point of view, if a relationship between the price of the commodity and the demand for the commodity can be modeled, an appropriate relationship between the price of the commodity and the demand for the commodity can be specified, and the price that can maximize the demand can be set. However, it is difficult to accurately model the relationship between the price of the commodity and the demand for the commodity in consideration of the price change of the commodity.

For example, when considering a price change of the commodity, it is assumed to model the relationship between the price of the commodity and the demand for the commodity after price change amount is applied. However, according to prospect theory in behavioral economics, the purchaser of the commodity often purchases the commodity considering the difference from an original price of the commodity, such as a price reduction. From this point of view, even if the relationship between the price of the commodity and the demand for the commodity is modeled in a state where the price change amount is absorbed by the original price of the commodity (that is, the price before the price change), it is difficult to accurately estimate the number of the purchaser, the number of the pieces of the commodity, and the like that fluctuate with the price change of the commodity.

Hereinafter, a description will be given of embodiments of the present disclosure with reference to the accompanying drawings.

### (First Embodiment)

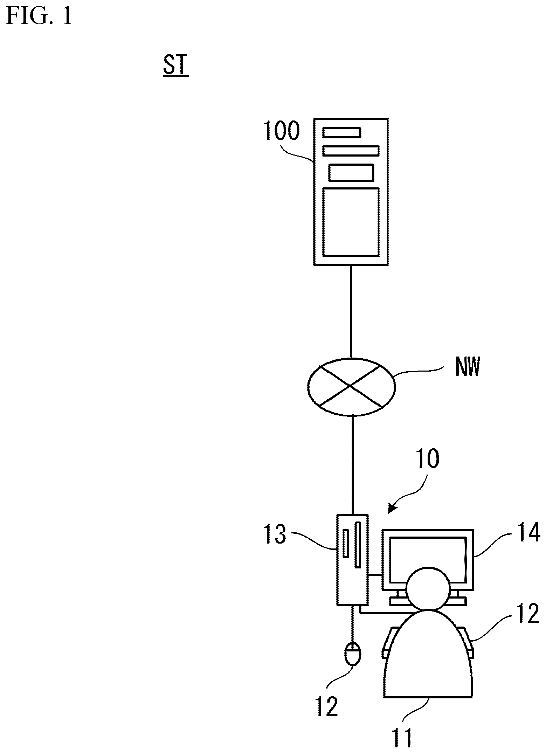

As illustrated in FIG. 1, an estimation system ST is a computer system including a terminal device 10 and an estimation server 100. The terminal device 10 and the estimation server 100 are connected to each other via a communication network NW. The communication network NW includes either or both of a local area network (LAN) and the Internet.

In FIG. 1, a personal computer (PC) is illustrated as an example of the terminal device 10, but the terminal device 10 is not limited to the PC. The terminal device 10 may be a smart terminal such as a smartphone or a tablet terminal. Although FIG. 1 illustrates a physical server device as an example of the estimation server 100, the estimation server 100 may be a virtual server device. Although one estimation server 100 is illustrated as an example in FIG. 1, a plurality of estimation servers 100 may be provided in the estimation system ST, and various processing executed by the estimation servers 100 may be distributed to the plurality of estimation servers 100.

The estimation system ST operates based on an instruction from the terminal device 10 operated by a user 11. The user 11 is, for example, an employee of an electronic commerce (EC) business operator that operates an online store. Although the details will be described in the second embodiment, the user 11 may be an employee of a mobility service provider that develops a bike-sharing service. The mobility service provider provides services for renting out various shared bike, including, for example, a small motorized bicycle and a pedal-assist e-bike. The shared bike is an example of a rental commodity. The shared bike is placed in a bike bay. The bike bay is, for example, a bicycle parking facility, including a bicycle parking area. The bike bay may be a parking facility, including a parking lot. Incidentally, the small motorized bicycle is sometimes called an electric scooter or an electric skater.

The user 11 can use the estimation system ST by operating an input device 12 provided in the terminal device 10 and accessing the estimation server 100. For example, when the user 11 performs a predetermined operation on the input device 12, a control device 13 of the terminal device 10 transmits an instruction corresponding to the predetermined operation to the estimation server 100. Upon receiving the instruction, the estimation server 100 executes various processing based on a received instruction.

As will be described in detail later, for example, when the estimation server 100 detects the instruction corresponding to the predetermined operation, the estimation server 100 generates a probability model for estimating a probability of changing purchase from one commodity to another commodity. The estimation server 100 can generate the probability model based on prices of a plurality of competing commodities, the price change amount of the commodity, and information indicating whether the purchaser has actually changed the purchase from one commodity to another commodity in the past in response to the price change of the commodity. The price change amount may be a discount amount or a premium amount. The discount amount is the difference before and after the price reduction of the commodity, and the premium amount is the difference before and after the price increase of the commodity. After generating the probability model, the estimation server 100 calculates an estimated number of purchasers of each of the competing commodities as the estimated number of the purchase based on the probability model. The estimation server 100 may calculate an estimated number of purchased items as the estimated number of the purchase instead of the estimated number of purchasers.

After calculating the estimated number of the purchasers, the estimation server 100 calculates the sales of each of the plurality of the commodities based on a multiplication of the estimated number of the purchasers of each of the plurality of the commodities and the price of each of the plurality of the commodities. After calculating the sales of each of the plurality of the commodities, the estimation server 100 calculates total sales of a commodity group including the plurality of the commodities based on the sum of the sales of each of the plurality of the commodities.

The estimation server 100 may calculate revenue of each of the plurality of the commodities by subtracting purchase costs of each commodity set in advance from the sales of each of the plurality of the commodities. In the absence of the purchase costs, the sales correspond to the revenue. Further, when the estimation server 100 calculates respective revenues of the plurality of the commodities, the estimation server 100 may calculate total revenue of the commodity group including the plurality of the commodities based on the sum of the respective revenues of the plurality of the commodities.

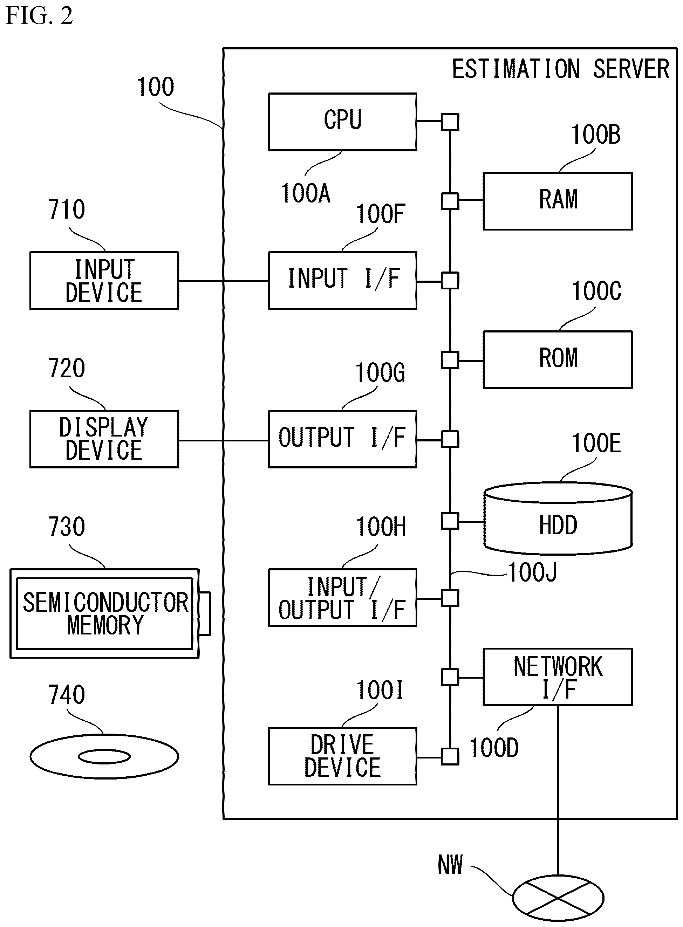

Referring to FIG. 2, the hardware configuration of the estimation server 100 will be described. Since the terminal device 10 has a hardware configuration basically similar to that of the estimation server 100, a detailed description thereof will be omitted.

The estimation server 100 includes a central processing unit (CPU) 100A as a processor, a random-access memory (RAM) 100B and a read only memory (ROM) 100C as memories. The estimation server 100 includes a network interface (I/F) 100D and a hard disk drive (HDD) 100E as a storage. Instead of the HDD100E, a solid-state drive (SSD) may be employed as the storage.

The estimation server 100 may include at least one of an input I/F 100F, an output I/F 100G, an input/output I/F 100H, and a drive device 100I as required. The CPU 100A to the drive device 100I are connected to each other by an internal bus 100J. That is, the estimation server 100 can be realized by a computer.

An input device 710 is connected to the input I/F 100F. The input device 710 includes, for example, a keyboard, a mouse, and a touch panel. A display device 720 is connected to the output I/F 100G. The display device 720 is, for example, a liquid crystal display. The input/output I/F 100H is connected to a semiconductor memory 730. The semiconductor memory 730 is, for example, a universal serial bus (USB) memory or a flash memory. The input/output I/F 100H reads an estimation program stored in the semiconductor memory 730. The input I/F 100F and the input/output I/F 100H include, for example, USB ports. The output I/F 100G includes, for example, a display port.

A portable recording medium 740 is inserted into the drive device 100I. Examples of the portable recording medium 740 include removable disks such as a compact disc (CD) - ROM and a digital versatile disc (DVD). The drive device 100I reads the estimation program recorded in the portable recording medium 740. The network I/F 100D includes, for example, a LAN port and a communication circuit. The communication circuit includes either one or both of a wired communication circuit and a wireless communication circuit. The network I/F 100D is connected to the communication network NW.

The CPU 100A temporarily stores in the RAM 100B an estimation program stored in at least one of the ROM 100C, the HDD 100E, and the semiconductor memory 730. The estimation program recorded in the portable recording medium 740 is temporarily stored in the RAM 100B by the CPU 100A. The CPU 100A executes a stored estimation program to realize various functions described later and to execute an estimation method including various processing described later. The estimation program may be one corresponding to a flowchart described later.

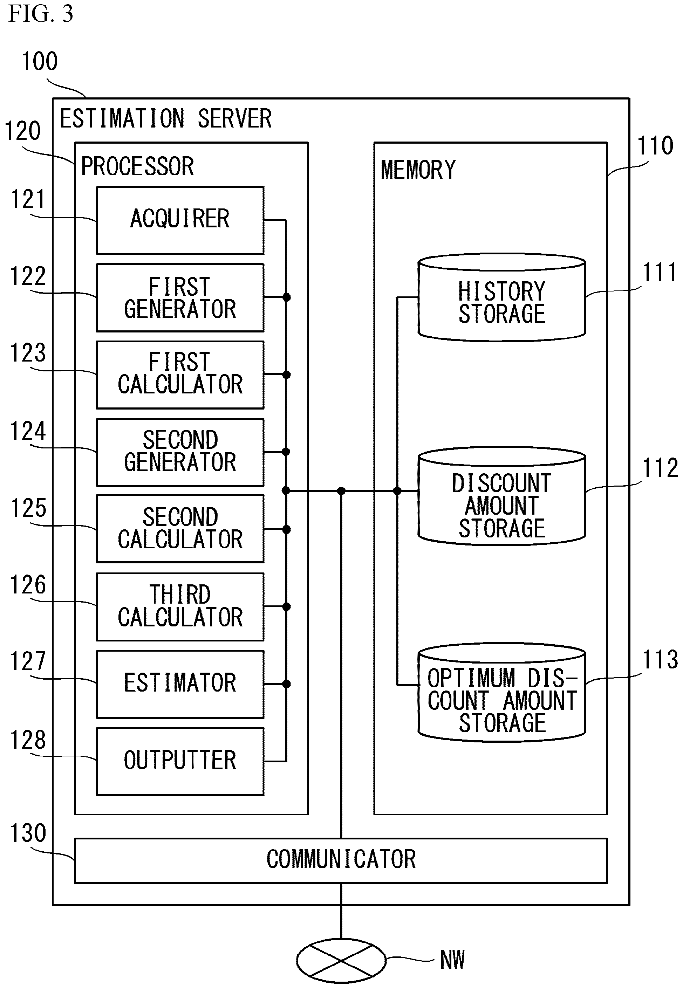

Referring to FIGS. 3 to 4C, the functional configuration of the estimation server 100 will be described. FIG. 3 illustrates a main part of the function of the estimation server 100.

As illustrated in FIG. 3, the estimation server 100 includes a memory 110, a processor 120, and a communicator 130. The memory 110 can be realized by either or both of the RAM 100B and the HDD 100E described above. The processor 120 can be realized by the CPU 100A described above. The communicator 130 can be realized by the network I/F 100D described above.

The memory 110, the processor 120, and the communicator 130 are connected to each other. The memory 110 includes a history storage 111, a discount amount storage 112, and an optimum discount amount storage 113. The processor 120 includes an acquirer 121, a first generator 122, a first calculator 123, a second generator 124, a second calculator 125, a third calculator 126, an estimator 127, and an outputter 128. The processor 120 executes various processing described later by using the acquirer 121, the first generator 122, the first calculator 123, the second generator 124, the second calculator 125, the third calculator 126, the estimator 127, and the outputter 128.

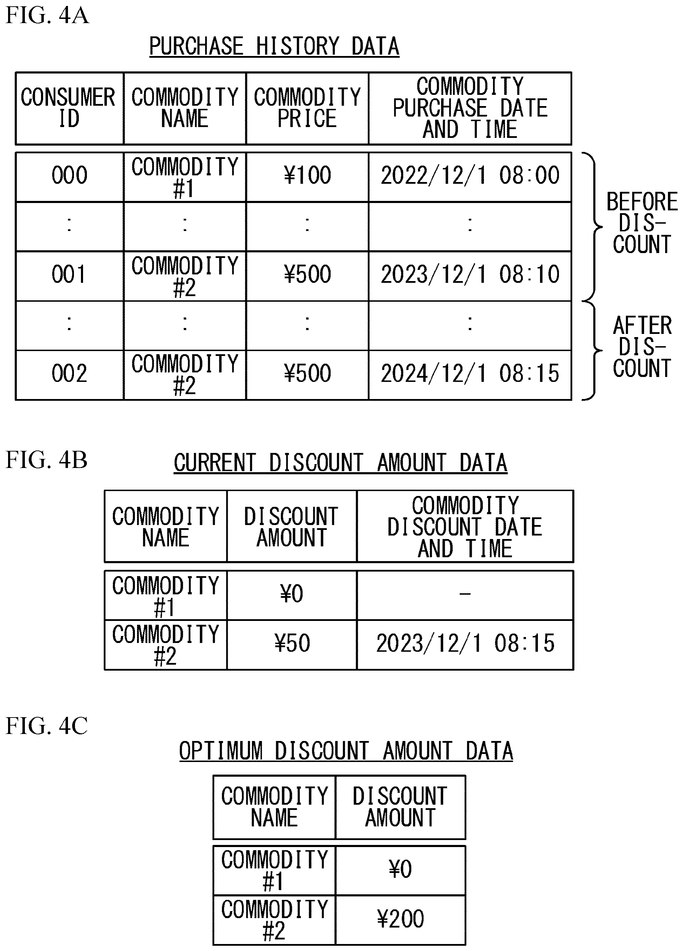

The history storage 111 stores purchase history data of the plurality of the competing commodities. The purchase history data is stored in the history storage 111 in advance. As illustrated in FIG. 4A, the purchase history data has a plurality of items such as a consumer identifier (ID), a commodity name, a commodity price, and a commodity purchase date and time. In the item of the consumer ID, the identification information of a consumer is registered. In the first embodiment, the identification information of the purchaser who has purchased the commodity is registered in the item of the consumer ID. In the item of the commodity name, the commodity name of the commodity is registered. The commodity with the commodity name "commodity #1" and the commodity with the commodity name "commodity #2" are sales commodities competing with each other. Instead of the commodity name, identification information of the commodities competing with each other may be registered. In the item of commodities price, an original price of the commodities before discount amount is applied (concretely an undiscounted unit price) is registered. In the item of the commodity purchase date and time, a date and time when the purchaser actually purchased the commodity is registered.

The discount amount storage 112 stores current discount amount data. The current discount amount data is stored in the discount amount storage 112 in advance. As illustrated in FIG. 4B, the current discount amount data has a plurality of items such as a commodity name, a discount amount, and a commodity discount date and time. In the item of the commodity name, the commodity name of the commodity is registered. In the item of the discount amount, the discount amount to the original price of the commodity is registered for each commodity. In the item of the commodity discount date and time, the date and time when the discount for the commodity is executed is registered as the commodity discount date and time. As illustrated in FIG. 4A, the purchase history data can be classified into the purchase history data before the discount and the purchase history data after the discount, depending on the commodity discount date and time.

The optimum discount amount storage 113 stores optimum discount amount data. The optimum discount amount data is stored in the optimum discount amount storage 113 by the estimator 127. As illustrated in FIG. 4C, the optimum discount amount data has a plurality of items such as a commodity name and a discount amount. In the item of the commodity name, the commodity name of the commodity is registered. In the item of the discount amount, the optimum discount amount estimated by the estimator 127 is registered for each commodity name. The optimal discount amount is the discount amount that can maximize the total sales or total revenue described above. By presenting the optimum discount amount to the user 11, the user 11 can avoid setting the inappropriate discount amount for the commodity.

When detecting a display instruction for instructing the terminal device 10 to display the status confirmation screen, which will be described later, the acquirer 121 acquires the purchase history data and the current discount amount data. The acquirer 121 can acquire the purchase history data before and after the discount separately. For example, the acquirer 121 accesses the discount amount storage 112 to check the current discount amount data, and acquires the purchase history data before the discount from the history storage 111. The acquirer 121 acquires the purchase history data before the discount, and then acquires the purchase history data after the discount and the current discount amount data. The acquirer 121 sends the purchase history data before the discount to the first generator 122. The acquirer 121 sends the purchase history data after the discount and the current discount amount data to the second generator 124 together with the purchase history data before the discount.

The first generator 122 generates a first probability model. More specifically, the first generator 122 generates the first probability model for each commodity based on the number of purchasers of all commodities in the purchase history data before the discount, the price of each commodity, and the discrete choice model. The first probability model is, for example, a multinomial logit model, and can be expressed by the following formula (1). ${P}_{i} = \frac{exp \left({V}_{i}\right)}{{\sum }_{j} exp \left({V}_{j}\right)}$ Formula (1)

Here, a utility Vᵢ in the first probability model represents a degree of consumer satisfaction with the commodity i (i=1, 2, ...). The utility Vᵢ is a deterministic term of the known utility function, as illustrated in the following formula (2). The deterministic term is represented by a dot product of a response coefficient vector β and a marketing variable vector xᵢ, as illustrated in the following formula (3). The response coefficient vector β is a parameter representing price responsiveness of the consumer (see, for example, Japanese National Publication of International Patent Application No. 2023-547777). The marketing variable vector xᵢ is an explanatory variable that determines the utility Vᵢ, such as the price. ${U}_{i} = {V}_{i} + {ϵ}_{i}$ Formula (2) ${V}_{i} = β ⋅ {x}_{i}$ Formula (3)

The first calculator 123 calculates the number of purchasers for each commodity based on the first probability model, the price of the commodity, and the number of purchasers for all commodities. Specifically, as described below, the first calculator 123 calculates a number D'₁ of the purchasers who have purchased the commodity with the commodity name "commodity #1" based on a number N of the purchasers who has purchased all the commodities, a first probability model P₁, and a price c₁ of the commodity with the commodity name "commodity #1".${D '}_{1} = {NP}_{1} \left({c}_{1}\right)$ Similarly, the first calculator 123 calculates a number D'₂ of the purchasers who have purchased the commodity name "commodity #2" based on the number N of the purchasers who has purchased all the commodities, a first probability model P₂, and a price c₂ of the commodity name "commodity #2".${D '}_{2} = {NP}_{2} \left({c}_{2}\right)$

The second generator 124 generates a second probability model. The second probability model is a probability model in which a prospective purchaser changes the purchase from one commodity to another. More specifically, the second generator 124 generates information representing a change in the number of purchasers due to the discount, based on the purchase history data after the discount and the purchase history data before the discount. For example, when the discount is applied to the price of the commodity with the commodity name "commodity #2", there is a possibility that some purchasers of the commodity with the commodity name "commodity #1" purchase the commodity with the commodity name "commodity #2" after the discount. The second generator 124 generates the information representing such a change in the number of purchasers. When the second generator 124 generates the information representing the change in the number of purchasers, the second generator 124 generates the second probability model based on this information, the current discount amount data, and the discrete choice model. The second probability model is, for example, the multinomial logit model, and can be expressed by the following formula (4). $P {′}_{i} = \frac{exp \left(Δ{c}_{i}\right)}{{\sum }_{j} exp \left(Δ{c}_{j}\right)}$ Formula (4)

Since the second probability model is represented by a discrete distribution, it is difficult to perform automatic differentiation required for estimating the optimum discount amount described later. Therefore, as illustrated in the following formula (5), the second probability model is described by Gumbel-Softmax. By describing the second probability model in term of the Gumbel-Softmax, the automatic differentiation can be implemented. gᵢ is a sample from the Gumbel function, τ is a temperature parameter that adjusts the accuracy of the approximation. The Gumbel-Softmax can be referred to a following non-patent document 1. The automatic differentiation can be referred to a following non-patent document 2. The formula (5) is an example of an automatic differential executable model. $P {′}_{i} = \frac{exp \left(Δ{c}_{i}+{g}_{i}\right) / τ}{{\sum }_{j} exp \left(Δ{c}_{j}+{g}_{j}\right) / τ}$ Formula (5)

### <Non-patent Document 1>

Chris J. et al, 2017, The Concrete Distribution: A Continuous Relaxation of Discrete Random Variables, ICLR 2017

### <Non-Patent Document 2>

Charles C. Margossian, A Review of automatic differentiation and its efficient implementation, WIREs Data Mining and Knowledge Discovery 9 (4), e1305-, 2019-03-20

The second calculator 125 calculates an estimated number of the purchasers of each commodity after the discount, based on the second probability model, the number of purchasers of each commodity, and the discount amount. Specifically, as described below, the second calculator 125 calculates the number of purchasers D₁ as the estimated number of the purchasers of the commodity with the commodity name "commodity #1" based on the number of purchases before the discount D'₁, the second probability model P'₂, and the discount amount Δ c₂ for the commodity with the commodity name "commodity #2". As some purchasers of the commodities with the commodity name "commodity #1" may purchase the commodities with the commodity name "commodity #2", the number of undiscounted purchasers of commodities with the commodity name "commodity #1" decreases. ${D}_{1} = D {′}_{1} - D {′}_{1} P {′}_{2} \left(Δ {c}_{2}\right)$ Similarly, the second calculator 125 calculates the number of purchasers D₂ as the estimated number of the purchasers of the commodity with the commodity name "commodity #2" based on the number of purchases D'₂ before the discount, the number of purchases D'₁ before the discount, the second probability model P'₂, and the discount amount Δ c₂ for the commodity with the commodity name "commodity #2". As some purchasers of the commodities with the commodity name "commodity #1" may purchase the commodities with the commodity name "commodity #2", the number of undiscounted purchasers of commodities with the commodity name "commodity #2" increases. ${D}_{2} = D {′}_{2} + D {′}_{1} P {′}_{2} \left(Δ {c}_{2}\right)$

In this way, the price of the commodity does not absorb the discount amount for the price of the commodity, and the price of the commodity and the discount amount are treated independently. Therefore, according to the present embodiment, a phenomenon that a selection is performed based on the difference from the original price, that is, a phenomenon based on the prospect theory, is reproduced with high accuracy. The prospect theory can be referred to a following non-patent document 3.

### <Non-patent Document 3>

Nicholas C. Barberis, Thirty Years of Prospect Theory in Economics: A Review and Assessment, Journal of Economic Perspectives-Volume 27, Number 1-Winter 2013-Pages 173-196

The third calculator 126 calculates the sales of each commodity based on the multiplication of the estimated number of the purchasers of each commodity and the price of each commodity. The third calculator 126 calculates the total sales of the commodity group including each commodity based on the sum of the sales of each commodity.

The estimator 127 estimates the optimum discount amount of each commodity that maximizes the total sales of the commodity group. When the estimator 127 estimates the optimum discount amount, the estimator 127 saves the optimum discount amount data including the optimum discount amount to the optimum discount amount storage 113. Thus, the optimum discount amount storage 113 stores the optimum discount amount data (see FIG. 4C). As will be described in detail later, the estimator 127 calculates gradient of the discount amount based on the automatic differentiation of the formula (5) described above, and continuously updates the discount amount based on the gradient and the gradient method (specifically, the gradient descent method). Thus, the estimator 127 estimates the optimum discount amount.

The outputter 128 outputs the optimum discount amount of each commodity to the terminal device 10. Thus, the user 11 can confirm the optimum discount amount of each commodity that maximizes the total sales of the commodity group.

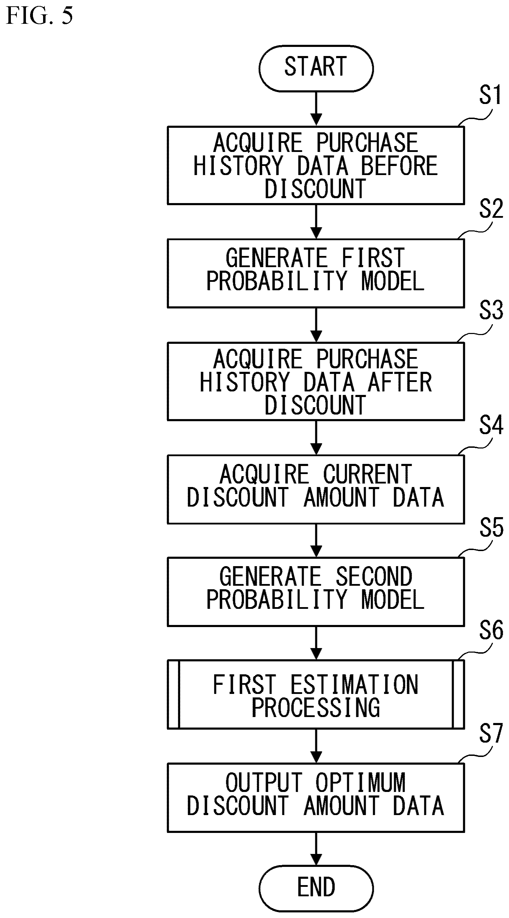

Referring to FIG. 5, the processing executed by the estimation server 100 according to the first embodiment will be described.

First, as illustrated in FIG. 5, the acquirer 121 acquires the purchase history data before discount (step S1). More specifically, when the acquirer 121 detects the display instruction described above, the acquirer 121 acquires the purchase history data before the discount. After the acquirer 121 acquires the purchase history data before the discount, the first generator 122 generates the first probability model (step S2). The first generator 122 can generate the first probability model for each commodity using the discrete choice model from the number of purchasers of all commodities in the purchase history data before the discount and the price of each commodity.

When the first generator 122 generates the first probability model, the acquirer 121 acquires the purchase history data after the discount (step S3). As described above, the acquirer 121 can acquire the purchase history data after the discount by confirming the current discount amount data. When the purchase history data after the discount is acquired, the acquirer 121 acquires the current discount amount data (step S4).

When the acquirer 121 acquires the current discount amount data, the second generator 124 generates the second probability model (step S5). As described above, the second generator 124 can generate information representing a change in the number of purchasers due to the discount based on the purchase history data after the discount and the purchase history data before the discount. The second generator 124 can generate the second probability model based on this information, the current discount amount data, and the discrete choice model.

When the second generator 124 generates the second probability model, the first calculator 123, the second calculator 125, the third calculator 126, and the estimator 127 cooperate with each other to execute the first estimation processing (step S6). The first estimation processing is a processing of estimating the optimum discount amount. The details of the first estimation processing will be described later. When the optimum discount amount is estimated by the first estimation processing, the outputter 128 outputs the optimum discount amount data of each commodity (step S7), and the series of processing is ended.

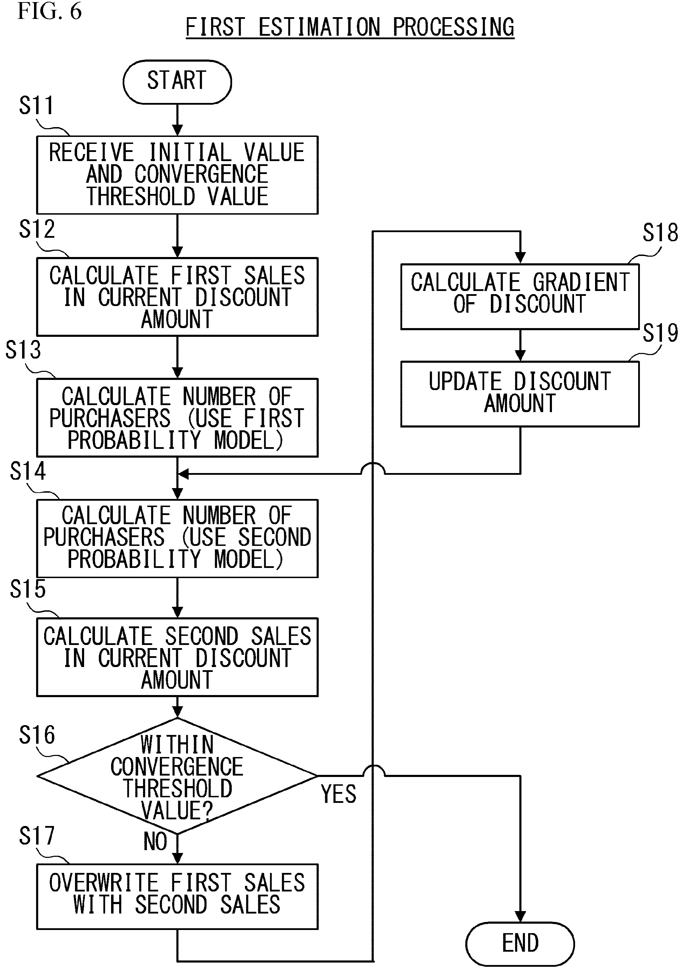

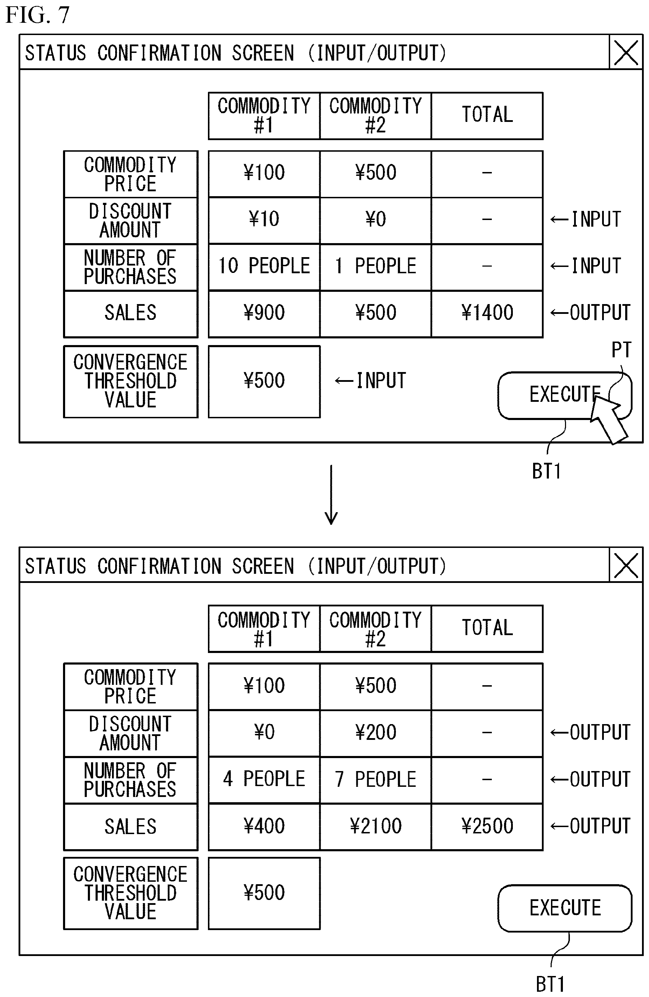

Referring to FIGS. 6 and 7, the first estimation process will be described.

First, as illustrated in FIG. 6, the estimator 127 receives initial values and a convergence threshold value (step S11). For example, the estimator 127 displays a status confirmation screen on the terminal device 10 as illustrated in an upper part of FIG. 7 based on the display instruction detected by the acquirer 121. The status confirmation screen includes the price of each commodity included in the purchase history data. In the status confirmation screen, the discount amount of each commodity and the number of purchasers of each commodity (indicated as the number of purchases in FIG. 7) are input and set by the user 11 as the initial values. In the status confirmation screen, the convergence threshold is input and set by the user 11. When an execution button BT1 on the status confirmation screen is pressed by a mouse pointer PT based on the operation of the user 11, the terminal device 10 transmits the initial values and the convergence threshold value to the estimation server 100. Thus, the estimator 127 receives the initial values and the convergence threshold.

When the estimator 127 receives the initial value and the convergence threshold value, the third calculator 126 calculates the first sales at the current discount amount (step S12). More specifically, the third calculator 126 applies the discount amount as the initial values to the price of the commodities, and multiplies the prices of the commodities after the discount amount is applied by the number of purchasers as the initial values for each commodity. When the prices of commodities are multiplied by the number of purchasers, the third calculator 126 calculates the first sales by adding the multiplication results of the respective commodities. The third calculator 126 can output the first sales as the total sales in the total column as illustrated in the upper part of FIG. 7.

When the third calculator 126 calculates the first sales, the first calculator 123 calculates the number of purchasers using the first probability model (step S13). More specifically, first, the first calculator 123 calculates the number of purchasers of all the commodities by adding up the number of purchasers of each commodity. After calculating the number of purchasers of all the commodities, the first calculator 123 calculates the number of purchasers of each commodity based on the number of purchasers of all the commodities, the first probability model, and the price of each commodity. Thus, as described above, the number D'₁ of purchasers of the commodity with the commodity name "commodity #1" and the number D'₂ of purchasers of the commodity with the commodity name "commodity #2" are calculated.

When the first calculator 123 calculates the number of purchasers using the first probability model, the second calculator 125 calculates the number of purchasers using the second probability model (step S14). More specifically, the second calculator 125 calculates the estimated number of purchasers of each commodity after the discount based on the second probability model, the number of purchasers of each commodity, and the discount amount. Thus, as described above, the number D₁ of purchasers of the commodity with the commodity name "commodity #1" and the number D₂ of purchasers of the commodity with the commodity name "commodity #2" are calculated.

When the second calculator 125 calculates the number of purchasers using the second probability model, the third calculator 126 calculates the second sales at the current discount amount (step S15). When the discount amount has not been updated, the discount amount as the initial values is adopted as the current discount amount. Therefore, the third calculator 126 applies the current discount amount to the price of the commodity, and multiplies the price of the commodity after the discount amount is applied by the number of purchasers calculated in step S14 for each commodity. When the price of the commodity is multiplied by the number of purchasers, the third calculator 126 calculates the second sales by adding up the multiplication results of the respective commodities.

When the third calculator 126 calculates the second sales, the estimator 127 determines whether or not the absolute value of the difference between the first sales and the second sales is within the convergence threshold value (step S16). When the absolute value is not within the convergence threshold value (step S16: NO), the estimator 127 overwrites the first sales with the second sales (step S17) and calculates the gradient of the discount (step S18). More specifically, the estimator 127 calculates the gradient of the discount amount of each commodity with respect to the first sales by the automatic differentiation.

After calculating the gradient of the discount amount, the estimator 127 updates the discount amount by the gradient descent method (step S19). When the estimator 127 updates the discount amount, the estimator 127 sends the updated discount amount to the second calculator 125 as the current discount amount. In this way, the second calculator 125 calculates the number of purchasers by setting the updated discount amount as the current discount amount in the processing of the step S14. Then, in the processing of the step S15, the third calculator 126 calculates the second sales again based on the number of purchasers calculated by the second calculator 125. In the processing of the step S16, the estimator 127 determines whether or not the absolute value of the difference between the first sales overwritten by the latest second sales and the newly calculated second sales is within the convergence threshold value.

When the absolute value is not within the convergence threshold value, the processing from the steps S17 to S19 is repeated. When the absolute value is within the convergence threshold value (step S16: YES), the estimator 127 determines the current discount amount of each commodity as the optimum discount amount, saves the optimum discount amount data including the optimum discount amount of each commodity to the optimum discount amount storage 113, and ends the first estimating processing.

After the completion of the first estimation processing, the outputter 128 acquires the optimum discount amount data from the optimum discount amount storage 113, and outputs the optimum discount amount of each commodity and the number of purchasers corresponding to the optimum discount amount of each commodity to the status confirmation screen. As a result, as illustrated in a lower part of FIG. 7, the optimum discount amount of each commodity, the number of purchasers of each commodity, the sales of each commodity, and the total sales appear on the status confirmation screen. In this way, even if a discount amount that does not maximize the total sales is set for the price of each commodity, the estimation server 100 estimates the optimum discount amount that maximizes the total sales. This allows the EC business operator to apply the optimal discount amount to the prices of commodities to ensure the maximum total sales. In particular, since the discount amount is treated independently from the original price of the commodity, the estimation server 100 can accurately estimate the number of purchasers and the total sales.

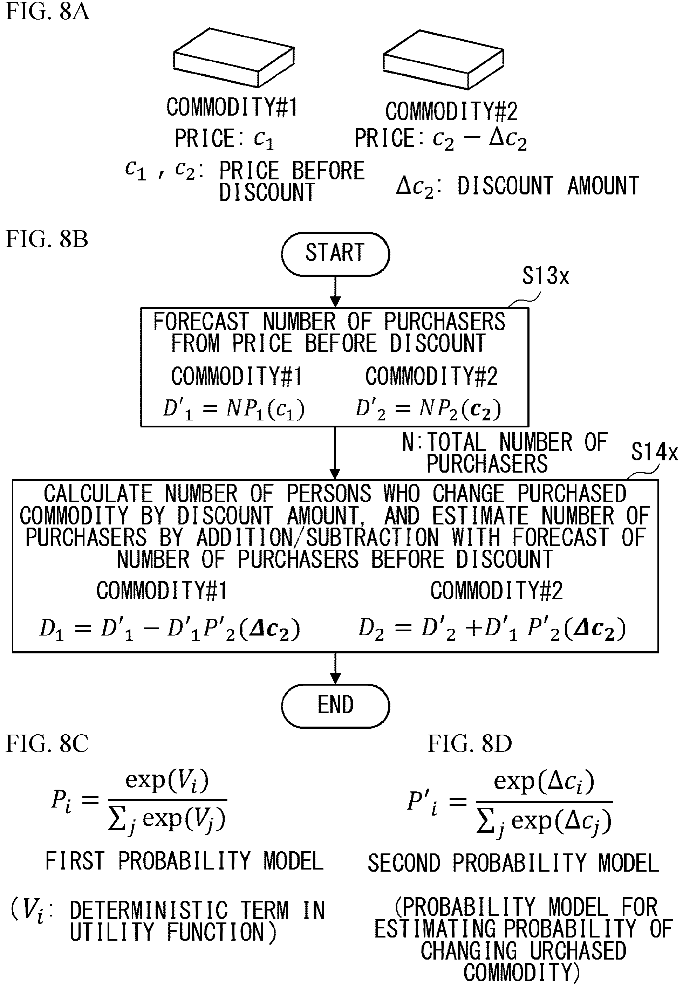

Referring to FIGS. 8A to 8D, the first embodiment will be schematically described.

First, as illustrated in FIG. 8A, the commodity price of the commodity of the commodity name "commodity #1" (simply described as commodity #1 in FIG. 8A) is a price c₁. The commodity price of the commodity of the commodity name "commodity #2" (simply described as commodity #2 in FIG. 8A) is a price after discount c₂-Δc₂ by subtracting a discount amount Δc₂ from a price c₂. As illustrated in FIG. 8B, for each commodity of the commodity names "commodity #1" and "commodity #2", the estimation server 100 calculates the number of purchasers by treating the prices c₁, c₂ and the discount amount Δc₂ independently.

More specifically, the estimation server 100 forecasts the number of purchasers before the discount based on the price before the discount (step S13x).

The processing of step S13x corresponds to the processing of step S13 described above. That is, the estimation server 100 calculates the number of purchasers D'₁, D'₂ of each commodity of the commodity names "commodity #1" and "commodity #2" based on the prices c₁, c₂, the first probability model illustrated in FIG. 8C, and the total number of purchasers N without taking the discount amount Δc₂ into account.

Next, the estimation server 100 calculates the number of persons who change the purchased commodity by the discount amount, and estimates the number of purchasers by addition/subtraction with the forecast of the number of purchasers before the discount (step S14x). The processing of step S14x corresponds to the processing of the step S14 described above. That is, the estimation server 100 calculates the number of persons who change the purchased commodity by the discount amount based on the discount amount Δc₂, the second probability model illustrated in FIG. 8D, and the number of purchases D'₁.

When the number of persons who change the purchased commodity is calculated, the estimation server 100 calculates the number of purchasers D₁ by subtracting the number of persons who change the purchased commodity from the number of purchasers D'₁ for the commodity of the commodity name "commodity #1" without the discount of the price of the commodity. On the other hand, the estimation server 100 calculates the number of purchasers D₂ by adding the number of persons who change the purchased commodity from the number of purchasers D'₁ for the commodity of the commodity name "commodity #2" having the discount of the price of the commodity. Therefore, the optimum discount amount is estimated as the discount amount Δc₂, the estimation server 100 can calculate the number of purchasers D₁, D₂ according to the optimum discount amount. The estimation server 100 can calculate the maximum total sales based on such the number of purchasers D₁, D₂.

### (Second Embodiment)

Next, a second embodiment of the present matter will be described. In the second embodiment, the case of the mobility service provider described above will be described. The mobility service provider will establish a plurality of bike bays in a given area. The bike bays are examples of the first and second commodities, which are necessary commodities attached to the provision of the mobility service by the mobility service provider. One shared bike is placed in each one of the plurality of the bike bays. Thus, each bike bay competes with each other in the arrangement of the shared bike. Each bike bay is equipped with a plurality of shared bikes. The shared bike is an example of a rental commodity, which is a necessary commodity attached to the provision of the mobility services by the mobility service provider.

Borrower of the shared bike borrows the shared bike at one of the bike bays, uses the shared bike for a predetermined time, and returns it to another bike bay. The bike bay where the borrower rents the shared bike is called a rental bay, and the bike bay where the borrower returns the shared bike is called a return bay. The borrower pays usage fee according to usage time to the mobility service provider.

Here, when the borrower uses the shared bike, there is a possibility that the shared bike is not arranged in the rental bay. The reason is that the arrangement of the plurality of shared bikes is biased due to the concentration of the plurality of the shared bikes in one of the plurality of the bike bays. If no shared bike is arranged in the rental bay, the borrower will not be allowed to use the shared bike. This prevents the mobility service provider from collecting the usage fee from the borrower. In other words, there is a risk that the sales of the mobility service provider will decrease.

In order to suppress the state where the shared bike is not arranged in the bike bay, it is desirable that the discount of the usage fee is executed when the shared bike is returned to the bike bay where the shared bike is likely to be not arranged. Thus, when the shared bike is returned, the borrower is guided to the bike bay where the bike bay is not easily arranged. The estimation server 100 according to the second embodiment estimates the optimal discount amount, suppresses a loss of a borrowing opportunity of the borrower, and maximizes the sales of the mobility service provider.

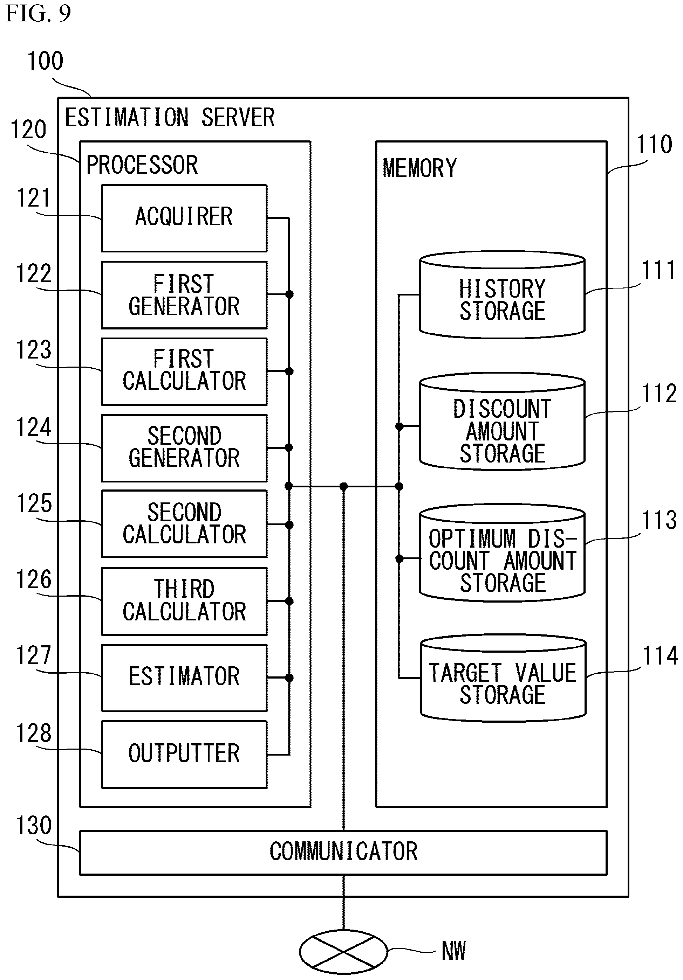

First, referring to FIGS. 9 to 11B, the functional configuration of the estimation server 100 according to the second embodiment will be described. The same components as those of the estimation server 100 described with reference to FIG. 3 are basically denoted by the same reference numerals, and detailed description thereof will be omitted. As illustrated in FIG. 9, the estimation server 100 according to the second embodiment is different from the estimation server 100 according to the first embodiment in that the estimation server 100 further includes a target value storage 114.

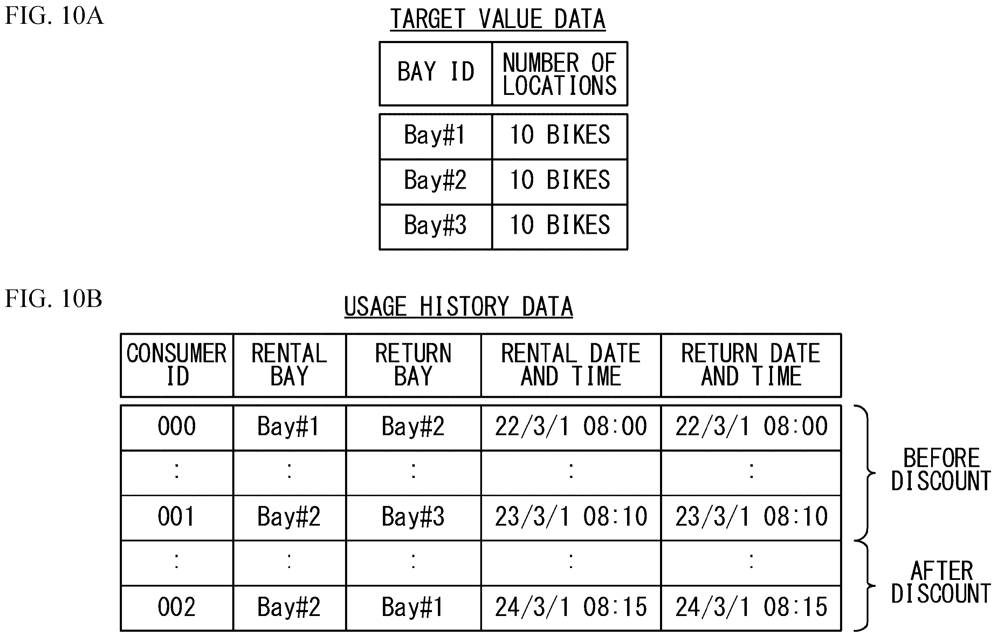

The target value storage 114 stores target value data including a target value of the number of shared bikes to be arranged in each of the plurality of bike bays. The target value data has a plurality of items such as a bay ID and the number of locations, as illustrated in FIG. 10A. In the item of the bay ID, the identification information of the bike bay is registered. In the item of the number of locations, a target value of the number of shared bikes arranged in the bike bay is registered.

Here, in the second embodiment, the history storage 111 stores usage history data of competing bike bays at a plurality of locations. The usage history data is stored in the history storage 111 in advance. As illustrated in FIG. 10B, the use history data has a plurality of items such as a consumer ID, a rental bay, a return bay, a rental date and time, and a return date and time. In the item of the consumer ID, the identification information of the consumer is registered. In the second embodiment, in the item of the consumer ID, the identification information of the borrower who borrows the shared bike is registered.

In the item of the rental bay, the identification information of the bike bay at which the shared bike has rented is registered. In the item of the return bay, the identification information of the bike bay at which the shared bike has returned is registered. In the rental date and time item, the date and time when the shared bike is has rented is registered. In the item of the return date and time, the date and time when the shared bike has returned is registered. The usage history data can be classified into usage history data before the discount and usage history data after the discount by usage charge discount date and time described later.

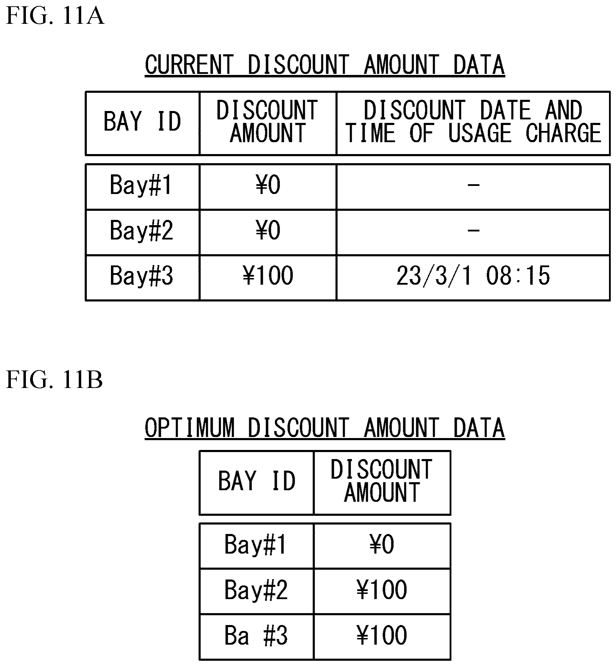

In the second embodiment, the discount amount storage 112 stores current discount amount data. The current discount amount data is stored in advance in the discount amount storage 112. As illustrated in FIG. 11A, the current discount amount data has a plurality of items such as a bay ID, a discount amount, and a discount date and time of the usage charge. In the item of the bay ID, the identification information of the bike bay is registered. In the item of the discount amount, the discount amount for the use charge is registered for each bay ID. In the item of the discount date and time of the usage charge, the date and time when the discount for the usage charge is executed is registered as the discount date and time of the usage charge. As illustrated in FIG. 10B, the purchase history data can be classified into purchase history data before the discount and purchase history data after the discount by the discount date and time of the usage charge.

In the second embodiment, the optimum discount amount storage 113 stores optimum discount amount data. The optimum discount amount data is stored in the optimum discount amount storage 113 by the estimator 127. As illustrated in FIG. 11B, the optimum discount amount data has a plurality of items such as a bay ID and a discount amount. In the item of the bay ID, the identification information of the bike bay is registered. In the item of the discount amount, the optimum discount amount estimated by the estimator 127 is registered for each bay ID. By presenting the optimum discount amount to the user 11, the user 11 can avoid setting an inappropriate discount amount for the bike bay.

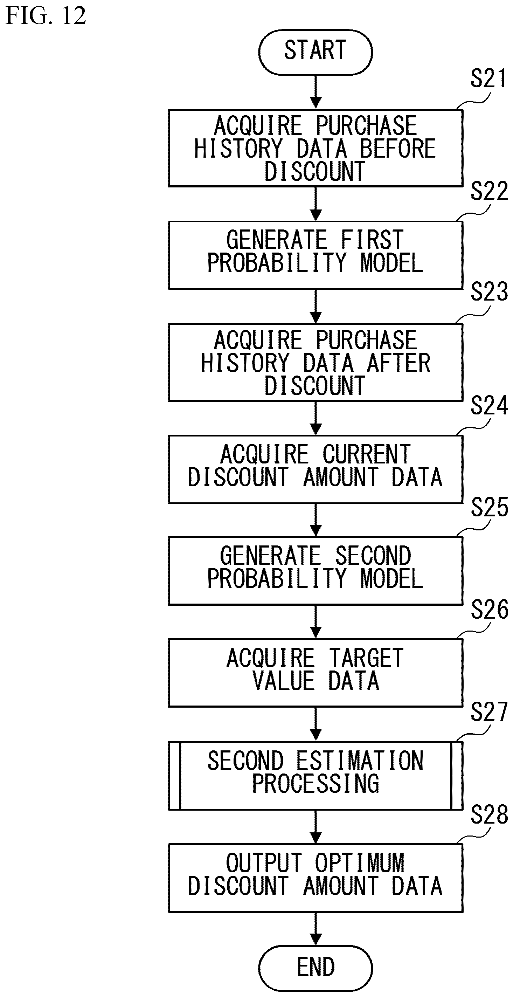

Referring to FIG. 12, processing executed by the estimation server 100 according to the second embodiment will be described.

First, as illustrated in FIG. 12, the acquirer 121 acquires the usage history data before the discount (step S21). More specifically, when the acquirer 121 detects the display instruction described above, the acquirer 121 acquires the usage history data before the discount. When the acquirer 121 acquires the usage history data before the discount, the first generator 122 generates a first probability model (step S22). The first generator 122 can generate a first probability model of a rental bay for each bike bay by using the discrete choice model from the total number of bike bays of all bike bays including the rental bay and the return bay in the usage history data before discount and the number of users of each rental bay in the usage history data before discount. Similarly, the first generator 122 can generate a first probability model of a return bay for each bike bay by using the discrete choice model from the total number of bike bays of all bike bays including the rental bay and the return bay in the usage history data before discount and the number of users of each return bay in the usage history data before discount.

When the first generator 122 generates the first probability model, the acquirer 121 acquires the usage history data after the discount (step S23). The acquirer 121 can acquire the usage history data after the discount by confirming the current discount amount data. When the usage history data after the discount is acquired, the acquirer 121 acquires the current discount amount data (step S24).

When the acquirer 121 acquires the current discount amount data, the second generator 124 generates a second probability model (step S25). The second generator 124 can generate information indicating a change in the number of users in the rental bay due to the discount and information indicating a change in the number of users in the return bay due to the discount, based on the usage history data after the discount and the usage history data before the discount. The second generator 124 can generate a second probability model of the return bay based on the two pieces of information, the current discount amount data, and the discrete choice model.

When the second generator 124 generates the second probability model, the acquirer 121 acquires the target value data (step S26). The acquirer 121 can acquire the target value data from the target value storage 114. When the acquirer 121 acquires the target value data, the first calculator 123, the second calculator 125, the third calculator 126, and the estimator 127 cooperate with each other to execute a second estimation processing (step S27). The second estimation processing is processing of estimating the optimum discount amount. The details of the second estimation process will be described later. When the optimum discount amount is estimated by the second estimation processing, the outputter 128 outputs the optimum discount amount data of each bike bay (step S28), and the series of processing is ended.

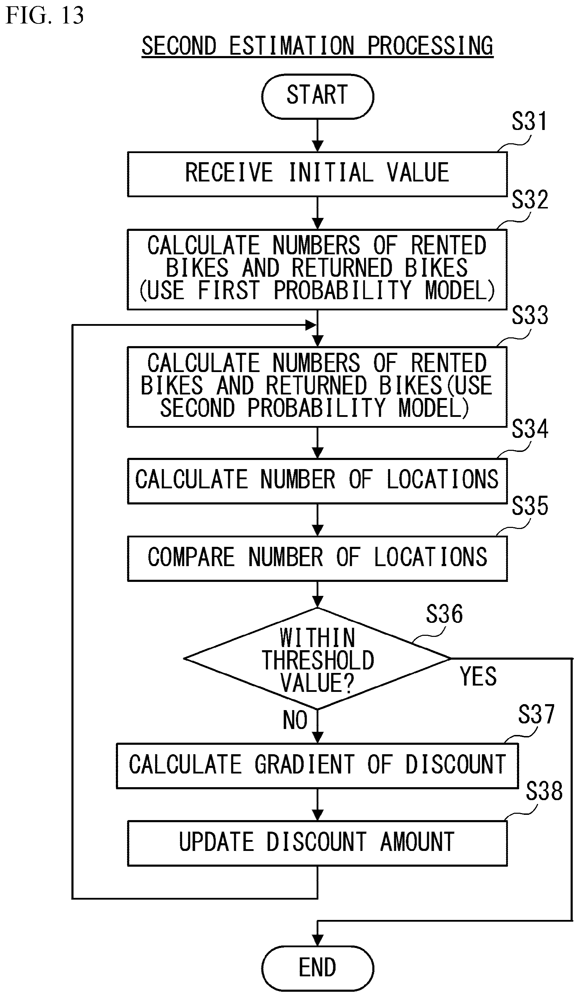

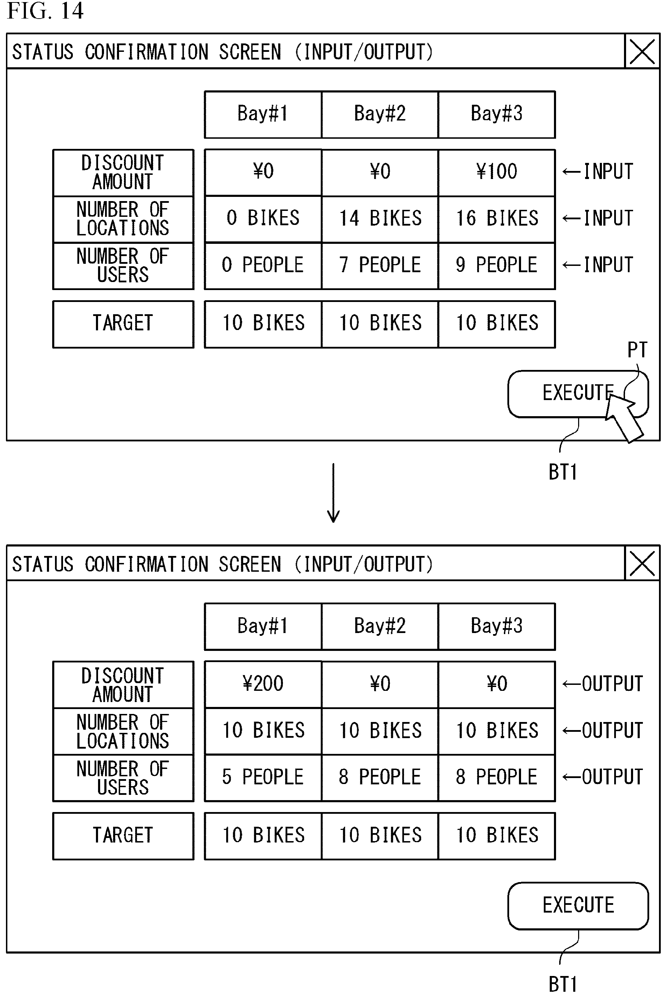

Referring to FIGS. 13 and 14, the second estimation processing will be described.

First, as illustrated in FIG. 13, the estimator 127 receives the initial values (step S31). For example, the first calculator 123 displays a status confirmation screen on the terminal device 10 as illustrated in the upper part of FIG. 14 based on the display instruction detected by the acquirer 121. The status confirmation screen includes the target value of each bike bay included in the target value data. In the status confirmation screen, the discount amount of each bike bay, the number of locations of shared bikes arranged in each bike bay, and the number of users of each bike bay (indicated as the number of users in FIG. 14) are input and set by the user 11 as the initial values. When the execution button BT1 on the status confirmation screen is pressed by the mouse pointer PT based on the operation of the user 11, the terminal device 10 transmits the initial values together with the total number of the bike bays to the estimation server 100. Thus, the estimator 127 receives the initial values together with the total number of bike bays.

When the estimator 127 receives the initial values, the first calculator 123 calculates the number of rentals and the number of returns using the first probability model (step S32). More specifically, the first calculator 123 calculates the number of rentals for shared bikes in each bike bay based on the total number of bike bays, the first probability model of the rental bay, and the number of users in each bike bay. Similarly, the first calculator 123 calculates the number of returns for shared bikes in each bike bay based on the total number of bike bays, the first probability model of the return bay, and the number of users in each bike bay.

After the first calculator 123 calculates the number of rentals and the number of returns using the first probability model, the second calculator 125 calculates the number of rentals and the number of returns using the second probability model (step S33). More specifically, the second calculator 125 calculates an estimated rental number of each bike bay after the discount based on the number of rentals for shared bikes in each bike bay, the second probability model of the return bay, and the discount amount of the return bay. Similarly, the second calculator 125 calculates an estimated return number of each bike bay after the discount based on the number of returns of shared bikes in each bike bay, the second probability model of the return bay, and the discount amount of the return bay.

When the second calculator 125 calculates the number of rentals and the number of returns using the second probability model, the third calculator 126 calculates the number of locations (step S34). The third calculator 126 can calculate the number of locations for shared bikes to be arranged in each bike bay for each bike bay based on the difference between the estimated number of rentals and the estimated number of returns of each bike bay after the discount. The number of locations for shared bikes calculated by the third calculator 126 is an example of an estimated number of locations.

When the third calculator 126 calculates the number of locations, the estimator 127 compares the number of locations (step S35). More specifically, the estimator 127 compares the number of locations for shared bikes arranged in each bike bay with the target value of the number of locations for shared bikes arranged in each bike bay included in the target value data for each bike bay. When the number of locations is compared, the estimator 127 determines whether or not the difference between the number of locations and the target value is within a threshold value (step S36). That is, the estimator 127 determines whether or not the difference between the number of locations for shared bikes arranged in each bike bay and the target value is within a threshold value for each bike bay.

When the difference is not within the threshold value (step S36: NO), the estimator 127 calculates the gradient of the discount (step S37). The estimator 127 may calculate the gradient of the discount when the value is not within the threshold value for all the bike bays, or may calculate the gradient of the discount when the value is not within the threshold value for any one of the bike bays. When the gradient of the discount is calculated, the estimator 127 calculates the gradient of the discount amount of each bike bay with respect to the difference between the number of locations for shared bikes arranged and the target value by the automatic differentiation.

After calculating the gradient of the discount amount, the estimator 127 updates the discount amount by the gradient descent method (step S38). When the estimator 127 updates the discount amount, the estimator 127 sends the updated discount amount to the second calculator 125 as the current discount amount. In this way, in the processing of the step S33, the second calculator 125 calculates the estimated number of rentals and the estimated number of returns by using the updated discount amount as the current discount amount. In the processing of the step S34, the third calculator 126 calculates the number of locations for shared bikes again based on the number of rentals and the number of returns calculated by the second calculator 125. In the processing of the step S35, the estimator 127 determines whether or not the difference between the target value and the newly calculated number of locations for shared bikes is within the threshold value.

When the difference is not within the threshold value, the processing from steps S37 to S38 is repeated. When the estimated value is within the threshold value (step S36: YES), the estimator 127 determines the current discount amount of each bike bay as the optimum discount amount, saves the optimum discount amount data including the optimum discount amount of each bike bay to the optimum discount amount storage 113, and ends the second estimating processing.

After the completion of the second estimation process, the outputter 128 acquires the optimum discount amount data from the optimum discount amount storage 113, and outputs the optimum discount amount of each bike bay and the number of users corresponding to the optimum discount amount of each bike bay to the status confirmation screen. As a result, as illustrated in the lower part of FIG. 14, the optimum discount amount of each bike bay and the number of users of each bike bay appear on the status confirmation screen. In this way, even if the discount amount that the number of locations for shared bikes is biased is set for each bike bay, the estimation server 100 estimates the optimum discount amount that the number of locations for shared bikes is not biased. This enables the mobility service provider to apply the optimum discount amount when returning the shared bikes, thereby suppressing the bias in the number of locations for shared bikes. As a result, the sales of the mobility service provider can be maximized.

Although the exemplary embodiments of the present invention have been illustrated in detail, the present invention is not limited to the above-mentioned embodiments, and other embodiments, variations and modifications may be made without departing from the scope of the present invention.

## Claims

1. An estimation method comprising:
generating a probability model for estimating a probability that a prospective purchaser changes purchase from a first commodity to a second commodity based on prices of the first commodity and the second commodity, a price change amount of the second commodity, and information indicating whether a purchaser has actually changed the purchase from the first commodity to the second commodity according to price change of the second commodity (S5); and
calculating an estimated number of purchases of each of the first commodity and the second commodity based on the probability model (S6).

2. The estimation method according to claim 1, wherein
the calculating includes calculating sales of the first commodity based on multiplication of the estimated number of purchases of the first commodity and a price of the first commodity, and calculating sales of the second commodity based on multiplication of the estimated number of purchases of the second commodity and a price of the second commodity.

3. The estimation method according to claim 2, wherein
the calculating includes calculating a total sale of a commodity group including the first commodity and the second commodity based on a sum of the sales of the first commodity and the sales of the second commodity.

4. The estimation method according to any one of claims 1 to 3, wherein
the probability model is an automatic differentiation executable model described by applying the Gumbel-Softmax method, and
the calculating includes calculating a gradient of the price change amount based on an automatic differentiation with respect to the automatic differentiation executable model (S18), and continuously updating the price change amount based on the gradient and a gradient method (S19).

5. The estimation method according to any one of claims 1 to 4, wherein
the generating includes generating the probability model based on the prices, the price change amount, the information, and a discrete choice model.

6. The estimation method according to any one of claims 1 to 5, wherein The first commodity and the second commodity are sales commodities competing with each other, and the estimated number of purchases is an estimated number of purchasers of each of the first commodity and the second commodity.

7. The estimation method according to any one of claims 1 to 5, wherein The first commodity and the second commodity are sales commodities competing with each other, and the estimated number of purchases is an estimated number of pieces of purchases of each of the first commodity and the second commodity.

8. An estimation method comprising:
generating a probability model for estimating a probability that a prospective borrower of a rental commodity changes return of the rental commodity from a first commodity to a second commodity based on the number of rental commodity arranged in the first commodity and the second commodity, a rental price change amount of the rental commodity, and information indicating whether or not the borrower of the rental commodity has actually changed the return of the rental commodity from the first commodity to the second commodity according to rental price change of the rental commodity (S25); and
calculating an estimated number of locations for the rental commodity arranged in each of the first commodity and the second commodity based on the probability model (S27).

9. The estimation method according to claim 8, wherein
the probability model is an automatic differentiation executable model described by applying the Gumbel-Softmax method, and
the calculating includes calculating a gradient of the rental price change amount based on an automatic differentiation with respect to the automatic differentiation executable model (S37), and continuously updating the rental price change amount until the estimated number of locations approaches a target value based on the gradient and a gradient method (S38).

10. The estimation method according to claim 8 or 9, wherein
The first commodity and the second commodity are bicycle parking facilities competing with each other.

11. An estimation program for causing a computer (100) to execute a process, the process comprising:
generating a probability model for estimating a probability that a prospective purchaser changes purchase from a first commodity to a second commodity based on prices of the first commodity and the second commodity, a price change amount of the second commodity, and information indicating whether a purchaser has actually changed the purchase from the first commodity to the second commodity according to price change of the second commodity (S5); and
calculating an estimated number of purchases of each of the first commodity and the second commodity based on the probability model (S6).

12. The estimation program according to claim 11, wherein
the calculating includes calculating sales of the first commodity based on multiplication of the estimated number of purchases of the first commodity and a price of the first commodity, and calculating sales of the second commodity based on multiplication of the estimated number of purchases of the second commodity and a price of the second commodity.

13. The estimation program according to claim 11 or 12, wherein
the probability model is an automatic differentiation executable model described by applying the Gumbel-Softmax method, and
the calculating includes calculating a gradient of the price change amount based on an automatic differentiation with respect to the automatic differentiation executable model (S18), and continuously updating the price change amount based on the gradient and a gradient method (S19).

14. An estimation program for causing a computer (100) to execute a process, the process comprising:
generating a probability model for estimating a probability that a prospective borrower of a rental commodity changes return of the rental commodity from a first commodity to a second commodity based on the number of rental commodity arranged in the first commodity and the second commodity, a rental price change amount of the rental commodity, and information indicating whether or not the borrower of the rental commodity has actually changed the return of the rental commodity from the first commodity to the second commodity according to rental price change of the rental commodity (S25); and
calculating an estimated number of locations for the rental commodity arranged in each of the first commodity and the second commodity based on the probability model (S27).

15. The estimation program according to claim 14, wherein
the probability model is an automatic differentiation executable model described by applying the Gumbel-Softmax method, and
the calculating includes calculating a gradient of the rental price change amount based on an automatic differentiation with respect to the automatic differentiation executable model (S37), and continuously updating the rental price change amount until the estimated number of locations approaches a target value based on the gradient and a gradient method (S38).
